# EUROPEAN PATENT APPLICATION

(11) **EP 2 753 021 A1**
(43) Date of publication of application: **09.07.2014**
(21) Application number: 13199795.9
(22) Date of filing: 30.12.2013
(51) Int. Cl.: H04L 12/28

(54) **Central controller and method for controlling the same**

(30) Priority: 02.01.2013 KR 20130000330
(71) Applicant: LG Electronics Inc., Seoul (KR)
(72) Inventor: Kim, Kyungjin, Seoul (KR); Kim, Daegu, Seoul (KR); Ha, Yuvin, Seoul (KR); Park, Junsoo, Seoul (KR)
(74) Representative: Cabinet Plasseraud

(57) **Abstract**

Disclosed is a central controller (100), comprising: a microphone (122); an audio output unit (152) configured to output audible information; a wireless communication unit (110) configured to communicate with an electronic device using wireless signals; an event unit (182) configured to receive event information on an event generated from the electronic device, through the wireless communication unit; and a controller (180) configured to control the audio output unit based on the received event information, such that a guide voice indicating a status of the electronic device is output, wherein once a voice for controlling the electronic device is input to the microphone, the wireless communication unit is controlled such that a control command corresponding to the voice is transmitted to the electronic device.

## Description

### BACKGROUND OF THE DISCLOSURE

### 1. Field of the Disclosure

The present disclosure relates to a central controller and a method for controlling the same, and particularly, to a central controller capable of controlling electronic devices using wireless communication, and a method for controlling the same.

### 2. Background of the Disclosure

Recently, owing to development of communication techniques, electronic devices equipped in a space having a prescribed size, such as home or an office, can be connected to each other through a network. For instance, in a case where electronic devices are connected to each other at home through a network, this is called 'home network'. At home provided with such home network, electronic devices connected to the home network may be controlled using a central server. However, such home network has been mainly used to turn on/off electronic devices. Therefore, a method capable of utilizing such home network more efficiently is required.

### SUMMARY OF THE DISCLOSURE

Therefore, an aspect of the detailed description is to provide a central controller capable of efficiently managing an event generated from an electronic device, and a method for controlling the same.

To achieve these and other advantages and in accordance with the purpose of this specification, as embodied and broadly described herein, there is provided a central controller, comprising: a microphone; an audio output unit configured to output audible information; a wireless communication unit configured to communicate with an electronic device using wireless signals; an event unit configured to receive event information on an event generated from the electronic device, through the wireless communication unit; and a controller configured to control the audio output unit based on the received event information, such that a guide voice indicating a status of the electronic device is output, wherein once a voice for controlling the electronic device is input to the microphone, the wireless communication unit is controlled such that a control command corresponding to the voice is transmitted to the electronic device.

In an embodiment, the controller may activate a wakeup mode for waiting for voice input to the microphone such that the control command is transmitted to the electronic device, in response to reception of the event information. In the wakeup mode, the microphone may be activated so as to receive voice input.

In an embodiment, in a case where no voice is input to the microphone for a preset time after the wakeup mode has been activated, the wakeup mode may be deactivated.

In an embodiment, the central controller may further comprise a display unit configured to output information. The controller may be configured to output status information of the electronic device to the display unit, based on the received event information.

In an embodiment, the amount of electrical power consumed by the electronic device may be displayed on the display unit, together with status information of the electronic device. The amount of electrical power consumed by the electronic device may be received from the electronic device, real time or at preset time intervals.

In an embodiment, the central controller may further comprise a sensing unit configured to sense a user's approaching status. The controller may activate the display unit in response to the user's approaching status sensed by the sensing unit, and may control the display unit such that the status information and the amount of electrical power consumed are output to the display unit.

In an embodiment, in a case where the amount of electrical power consumed by the electronic device exceeds a reference value, the controller may output an alarm message using at least one of the audio output unit and the display unit.

In an embodiment, the controller may control the wireless communication unit such that a control signal for switching an operation mode of the electronic device into a power saving mode is transmitted to the electronic device.

In an embodiment, the controller may transmit the received event information to a preset auxiliary controller, in response to reception of the event information. Once a control signal for controlling the electronic device is received from the central controller, the controller may control the wireless communication unit such that the received control signal is transmitted to the electronic device.

In an embodiment, the event may occur from the electronic device when a task being executed at the electronic device has ended or stopped, or there is any task executable at the electronic device.

To achieve these and other advantages and in accordance with the purpose of this specification, as embodied and broadly described herein, there is also provided a method for controlling a central controller, the method comprising: communicating the central controller with an electronic device; receiving event information on an event generated from the electronic device; outputting a guide voice indicating a status of the electronic device, based on the received event information; receiving a voice for controlling the electronic device; and transmitting a control command corresponding to the received voice to the electronic device.

In an embodiment, in the step of outputting a guide voice, if a user is sensed within a preset distance based on the display unit, status information of the electronic device corresponding to the event information may be output to the display unit.

In an embodiment, in the step of receiving event information, information on the amount of electrical power consumed by the electronic device may be received. If the amount of electrical power consumed by the electronic device exceeds a reference value based on the received information on the amount of electrical power consumed, an alarm message may be output in at least one of audible and visual manners.

In an embodiment, the method may further comprise generating a control signal for converting an operation mode of the electronic device into a power saving mode, and transmitting the generated control signal to the electronic device, in a case where the amount of electrical power consumed by the electronic device exceeds a reference value.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a block diagram for explaining a central controller according to an embodiment of the present invention;
FIG. 2 is a conceptual view for explaining a central controller according to an embodiment of the present invention;
FIG. 3 is a flowchart for explaining an operation of a central controller according to an embodiment of the present invention;
FIG. 4 is a conceptual view for explaining the central controller of FIG. 3;
FIGS. 5A and 5B are conceptual views for explaining a method for displaying information by a central controller according to an embodiment of the present invention;
FIGS. 6A and 6B are conceptual views for explaining a method for providing information on the amount of electrical power consumed by a central controller according to an embodiment of the present invention;
FIG. 7 is a conceptual view for explaining a method for communicating an electronic device with a central controller according to an embodiment of the present invention; and
FIGS. 8A and 8B are conceptual views for explaining the appearance of a central controller according to an embodiment of the present invention.

### DETAILED DESCRIPTION OF THE DISCLOSURE

Hereinafter, the present disclosure will be explained in more detail with reference to the attached drawings. For the sake of brief description with reference to the drawings, the same or equivalent components will be provided with the same reference numbers, and description thereof will not be repeated. The suffixes "module" and "unit or portion" for components used in the following description merely provided only for facilitation of preparing this specification, and thus they are not granted a specific meaning or function. If it is regarded that detailed descriptions of the related art are not within the range of the present invention, the detailed descriptions will be omitted. Furthermore, it should also be understood that embodiments are not limited by any of the details of the foregoing description, but rather should be construed broadly within its spirit and scope and it is intended that the present invention cover modifications and variations of this invention provided they come within the scope of the appended claims and their equivalents.

A central controller according to the present invention is configured to output information on at least one electronic device (not shown) or to control the electronic device, by being connected to the electronic device using wired communication or wireless communication. Such central controller may be utilized in a home network. The home network means that one or more electronic devices or electronic appliances used at home is connected to a single system in a wired or wireless manner. In an environment where such home network or a network has been established, the central controller can receive information on one or more electronic devices which perform communication in a wired or wireless manner, and can provide a user with the information. The central controller can also control at least one electronic device in correspondence to a control command received from a user. Hereinafter, the central controller will be explained in more detail with reference to the attached drawings.

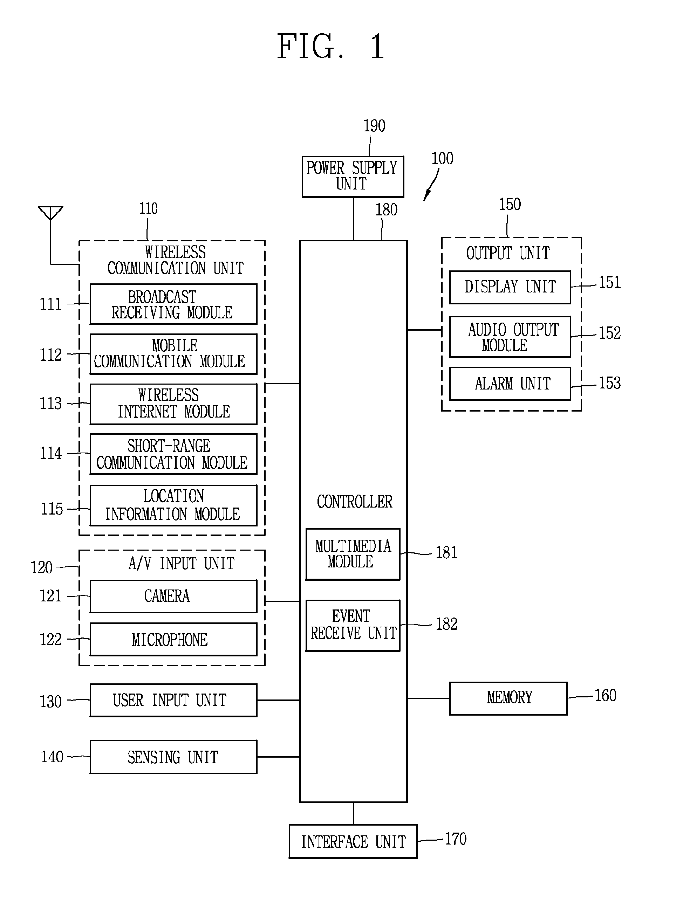

FIG. 1 is a block diagram of a central controller according to an embodiment of the present invention.

As shown in FIG. 1, the central controller 100 includes a wireless communication unit 110, an A/V (Audio/Video) input unit 120, a user input unit 130, a sensing unit 140, an output unit 150, a memory 160, an interface unit 170, a controller 180, and a power supply unit 190. FIG. 1 shows the central controller 100 having various components, but it is understood that implementing all of the illustrated components is not a requirement. The central controller 100 may be implemented by greater or fewer components.

Hereinafter, each of the above components will be explained.

The wireless communication unit 110 typically includes one or more components to authorize wireless communication between the central controller 100 and a wireless communication unit system or a network in which the central controller 100 is located. For example, the wireless communication unit 110 may include a broadcast receiving module 111, a mobile communication module 112, a wireless Internet module 113, a short range communication module 114, a location information module 115, etc.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network. In this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The mobile communication module 112 is configured to implement a video call mode and a voice call mode. The video call mode indicates a call performed while a user views counterpart, whereas the voice call mode indicates a call performed while a user does not view counterpart. For implementation of the video call mode and the voice call mode, the mobile communication module 112 is configured to transmit and receive at least one of voice data and image data.

The wireless Internet module 113 supports wireless Internet access for the mobile communication terminal. This module may be internally or externally coupled to the central controller 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short range communication module 114 is a module for supporting short range communications. Some examples of short range communication technology include Bluetooth™, Radio Frequency IDentification (RFID), Infrared Data Association (IrDA), Ultra-WideBand (UWB), ZigBee™, Near Field Communication (NFC) and the like.

The location information module 115 is a module for acquiring a location (or position) of the mobile communication terminal. For example, the location information module 115 may include a GPS (Global Positioning System) module.

Referring to FIG. 1, the A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate input data for controlling an operation of the central controller 100 by a user. The user input unit 130 may be implemented as a keypad, a dome switch, a touch pad, a jog wheel, a jog switch, and the like. The user input unit 130 may be configured so as to be separated from the central controller by hardware, and may be configured to transmit the input data in the form of a wireless signal. For this, the user input unit 130 may be a remote controller.

The sensing unit 140 senses a location of the central controller 100, a user's approaching degree, etc. The location of the central controller 100, the user's approaching degree, etc. may be sensed by triangulation using laser, etc. as an optical source. Alternatively, the location of the central controller 100, the user's approaching degree, etc. may be sensed through image capturing by a camera, or through a combination of a camera and an optical source.

The sensing unit 140 may be configured to sense a motion such as a user's gesture.

Such sensing signal can be transmitted to the controller 180. In addition, the sensing unit 140 can sense whether or not the power supply unit 190 supplies power or whether or not the interface unit 170 is coupled with an external device.

The output unit 150 is configured to provide outputs in a visual, audible, and/or tactile manner. The output unit 150 may include the display unit 151, an audio output module 152, an alarm unit 153, a haptic module 154, and the like.

The display unit 151 may display information processed in the central controller 100. For example, when the central controller 100 is in an event information output mode, the display unit 151 may display a User Interface (UI) or a Graphic User Interface (GUI) associated with an electronic device corresponding to a received event or received event information.

When the central controller is in a call mode, the display unit 151 may display a UI or GUI associated with a call.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, and e-paper.

In a case where the display unit 151 is implemented as e-paper, electrical power for displaying information on the display unit 151 can be reduced.

If the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area of a touch object, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region on the display unit 151 has been touched.

Referring to FIG. 1, a proximity sensor may be arranged at an inner region of the central controller covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this case, when the pointer is in the status of the proximity touch, it means that the pointer is positioned to correspond vertically to the touch screen.

The proximity sensor detects a proximity touch and a proximity touch pattern (e.g., a proximity touch distance, a proximity touch speed, a proximity touch time, a proximity touch position, a proximity touch motion status, or the like), and information corresponding to the sensed proximity touch operation and the proximity touch pattern can be output to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., determining whether the amount of electrical power consumed has exceeded a reference value, outputting event information, etc.) performed in the central controller 100. The audio output module 152 may include a receiver, a speaker, a buzzer, etc. A speaker of the audio output module 152 may be configured as a thin film type speaker.

The alarm unit 153 outputs a signal for informing about an occurrence of an event of the central controller 100. Events generated in the central controller may include call signal reception, message reception, key signal inputs, and the like. In addition to video or audio signals, the alarm unit 153 may output signals in a different manner, for example, to inform about an occurrence of an event. For example, the alarm unit 153 may output a signal in the form of vibration. The video signal or audio signal may be output through the display unit 151 or the voice output module 152. Therefore, the display unit 151 and the voice output module 152 may be categorized as part of the alarm unit 153.

The memory 160 may store software programs used for the processing and controlling operations performed by the controller 180, or may temporarily store data (e.g., the amount of electrical power consumed, the average amount of electrical power consumed, a usage pattern of an electronic device, etc.) that are input or output. The memory 160 may store data related to various patterns of vibrations and sounds output when touch input to the touch screen is sensed.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the central controller 100 may be operated in relation to a web storage device that performs the storage function of the memory 160 over the Internet.

The interface unit 170 serves as an interface with every external device connected with the central controller 100. For example, the external devices may transmit data to an external device, receives and transmits power to each element of the central controller 100, or transmits internal data of the central controller 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

Here, the identification module may be a chip that stores various information for authenticating the authority of using the central controller 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the central controller 100 via the interface unit 170.

When the central controller 100 is connected with an external cradle, the interface unit 170 may serve as a passage to allow power from the cradle to be supplied therethrough to the central controller 100 or may serve as a passage to allow various command signals input by the user from the cradle to be transferred to the central controller therethrough. Various command signals or power input from the cradle may operate as signals for recognizing that the central controller is properly mounted on the cradle.

The controller 180 typically controls the general operations of the central controller. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

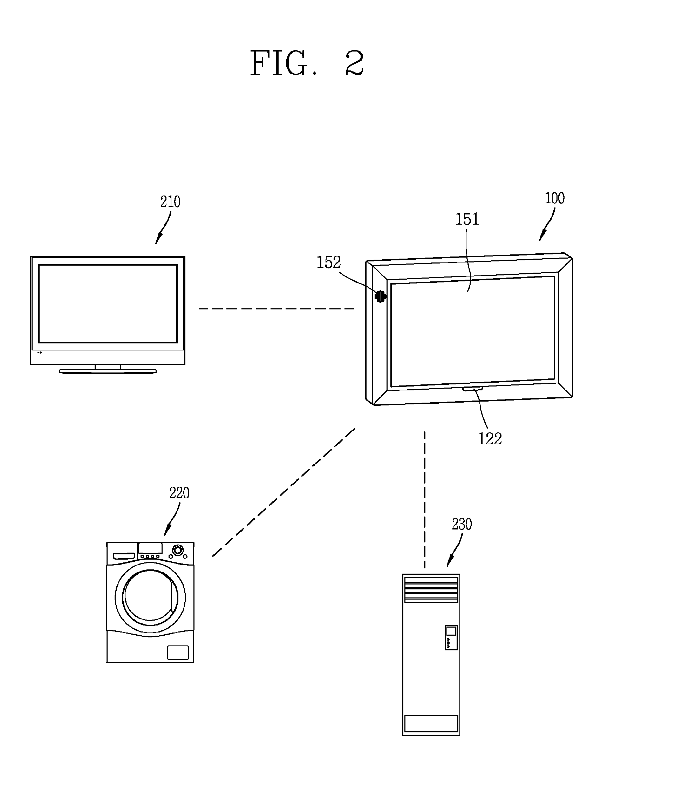

Hereinafter, a connection relation between the central controller of FIG. 1 according to an embodiment of the present invention and electronic devices will be explained in more detail with reference to the attached drawings. FIG. 2 is a conceptual view for explaining a central controller according to an embodiment of the present invention.

As shown in FIG. 2, the central controller 100 according to an embodiment of the present invention may be connected to at least one of electronic devices 210, 220, 230 through a wireless communication . The wireless communication unit 110 of the central controller 100 may communicate with at least one of electronic devices 210, 220, 230 using at least one of Wi-Fi (Wireless-Fidelity), DLNA (Digital Living Network Alliance), NFC (Near Field Communication), infrared communication (Infrared Data Association; IrDA), UWB(Ultra Wideband), ZigBee, BT(BlueTooth) and Wi-Fi direct communication.

A communication method between the central controller 100 and the electronic devices 210, 220, 230 may be set through a user's selection, or through automatic recognition among the electronic devices. As shown in FIG. 2, the central controller 100 according to an embodiment of the present invention may be connected to the smart TV 210, the washing machine 220, the air conditioner 230, etc. Alternatively, the central controller 100 may perform communication with at least one electronic device disposed within an area (space) where wireless communication with the wireless communication unit 110 can be performed.

A method, capable of receiving event information generated from an electronic device and generating a control signal by the central controller 100 which performs communication with the electronic device, will be explained in more detail with reference to the attached drawings.

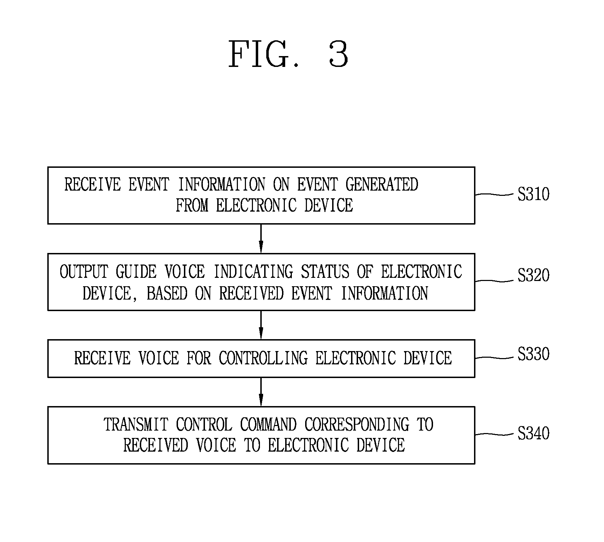

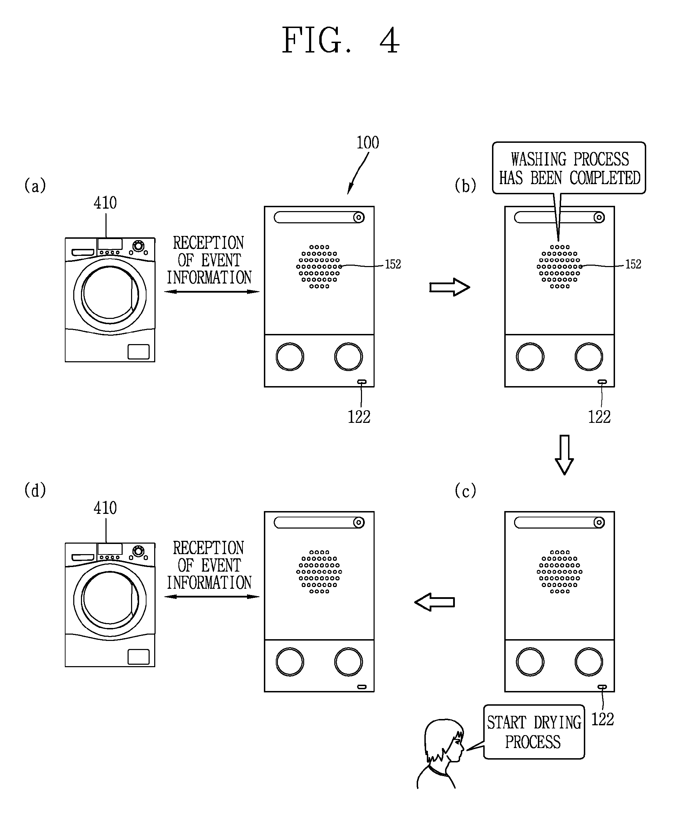

FIG. 3 is a flowchart for explaining an operation of a central controller according to an embodiment of the present invention, and FIG. 4 is a conceptual view for explaining the central controller of FIG. 3.

As aforementioned, the central controller 100 according to an embodiment of the present invention receives event information on an event generated from an electronic device (S310). As aforementioned, the wireless communication unit 110 of the central controller 100 may perform communication with an electronic device using at least one of Wi-Fi (Wireless-Fidelity), DLNA (Digital Living Network Alliance), NFC (Near Field Communication), infrared communication (Infrared Data Association; IrDA), UWB (Ultra Wideband), ZigBee, BT (BlueTooth) and Wi-Fi direct communication.

As the electronic device, any electronic device capable of performing communication with the central controller 100 using such communication method can be used. In the occurrence of an event, the electronic device may transmit event information on the occurred event to the central controller 100.

An event generated from the electronic device may be received by an event receiving unit 182. Such event may occur from the electronic device when a task being executed at the electronic device has ended or stopped, or there is any task executable at the electronic device.

As one example, in a case where the electronic device is a washing machine, an event may occur when a washing process has been completed, when laundry has not been taken out for a preset time after a washing process, when the washing machine has broken down, etc.

As another example, in a case where the electronic device is an air conditioner, an event may occur when the air conditioner has broken down, when the current time is a time when the amount of electrical power consumed is maximum, when an indoor temperature is proper, when indoor air has a high discomfort index, etc.

As another example, in a case where the electronic device is a refrigerator, an event may occur when the refrigerator is turned-off, when a door of the refrigerator is open, when the electronic device is switchable to a power saving mode, etc.

As another example, in a case where the electronic device is a television, an event may occur when a recording has started or completed, when the current time has reached a preset alarm time, when an advertisement has started, when a reserved program has started, when the electronic device is switchable to a power saving mode, etc.

As another example, in a case where the electronic device is a microwave oven, an event may occur when cooking has ended, when the microwave oven has broken down, when the electronic device is switchable to a power saving mode, etc.

As another example, an event may occur when an electronic device is a portable phone, when a call signal or a message has been received, when the current time has reached a preset alarm time, when information (e.g., information on application update or weather, etc.) has been received, when an application is executed, etc.

As aforementioned, the central controller 100 may receive event information on an event generated from an electronic device.

The central controller 100 may output a guide voice indicating a status of an electronic device, based on the received event information (S320). However, the present invention is not limited to this. Such status of the electronic device may be indicated as light is output from an optical indicator (e.g., LED), or as vibration generated from a vibrator is transmitted to outside.

More specifically, upon receipt of event information from an electronic device, the controller 180 may control the audio output unit 152 such that event information indicating a status of the electronic device is output, based on the received event information. Under such configuration, a user can recognize an event generated from the electronic device through a guide voice even when he or she is not close to the central controller 100.

The central controller 100 according to an embodiment of the present invention may be provided with at least one auxiliary controller (not shown) within an area where wireless communication can be performed. Under such configuration, when a user is positioned within an area where wireless communication can be performed, the user can recognize event information at any time. In this case, the controller 180 may recognize the user's position through the central controller 100 or the auxiliary controller, thereby outputting event information to the central controller 100 or the auxiliary controller which is within the range of the user's position. In the following descriptions, it is assumed that the central controller 100 or the auxiliary controller is positioned within an area where a user can recognize event information. Such user's position may be sensed by the sensing unit 140. The controller 180 may control the audio output unit 152 such that a level of a voice to be output is variable according to a distance between a user and a body of the central controller 100.

After the guide voice indicating a status of the electronic device has been output through the audio output unit 152 based on the received event information, the central controller 100 receives a voice for controlling the electronic device through the microphone 122 (S330). Upon receipt of the voice, the central controller 100 transmits a control command corresponding to the received voice to the electronic device (S340).

More specifically, the controller 180 may generate a control signal for controlling the electronic device, using a user's voice input through the microphone 122. Such control signal is transmitted to the electronic device through the wireless communication unit 110, so that the electronic device can be controlled based on the user's voice. Accordingly, the user can immediately react with an event generated from the electronic device.

In response to event information received from the electronic device, the controller 180 may activate a wakeup mode for waiting for voice input to the microphone 122. For instance, in a case where the microphone 122 is in an activated status, when an input voice is not a voice for controlling the electronic device, the controller 180 may erroneously recognize the input voice as a voice for controlling the electronic device. Accordingly, the microphone 122 may be controlled to be activated only in a preset case (or the microphone 122 may be controlled so that the wakeup mode can be activated). As aforementioned, such preset case may be a case where event information has been received from an electronic device. If voice input to the microphone 122 is not executed after the wakeup mode of the microphone 122 has been activated, the wakeup mode of the microphone 122 may deactivate. More specifically, in a case where the wakeup mode of the microphone 122 is in a deactivated status, even if a user inputs a voice to the electronic device, the controller 180 may not recognize the input voice as a control command for controlling the electronic device. In this case, the user may re-activate the wakeup mode of the microphone 122 by additionally manipulating the central controller 100.

In a case where a voice is input to the microphone 122, the controller 180 may analyze the input voice and generate a control command corresponding to the analyzed voice.

As one example, the controller 180 may convert an input voice into a text using a speech to text (STT) technique. Then, the controller 180 may compare the text with control commands pre-stored in the memory 160, thereby selecting a control command corresponding to the text.

As another example, the controller 180 may understand a language corresponding to an input voice, and generate a control command corresponding to the language, using a natural language processing technique. That is, the controller 180 may analyze a meaning of an input voice, generate a control command corresponding to the meaning, and transmit the control command to an electronic device.

The control command may be transmitted to the electronic device, through wireless communication, in the form of a control signal.

The method for controlling the central controller will be explained in more detail with reference to FIG. 4. As shown in FIG. 4(a), if an event has occurred from an electronic device 410 (e.g., washing machine) and the central controller 100 has received event information, the controller 180 outputs status information of the electronic device 410 corresponding to the event information through the audio output unit 152. For instance, the audio output unit 152 may output status information indicating "Washing process has been completed." in response to "Washing completion event". As shown in FIG. 4(c), upon input of a user's voice (e.g., "Start drying process"), the controller 180 may generate a control command corresponding to the user's input voice. As shown in FIG. 4(d), the controller 180 may transmit a control signal corresponding to the control command, to the electronic device 410, through the wireless communication unit 110. The electronic device 410 may perform an operation corresponding to the user's input voice, in response to the received control signal.

As aforementioned, in the central controller and the method for controlling the same according to an embodiment of the present invention, event information on an electronic device is output through a guide voice, and a control command is received through a user's voice. Under such configuration, a user can recognize an event at any time even when he or she is not close to the central controller, and apply a control command to the electronic device. This can allow a user's convenience to be enhanced.

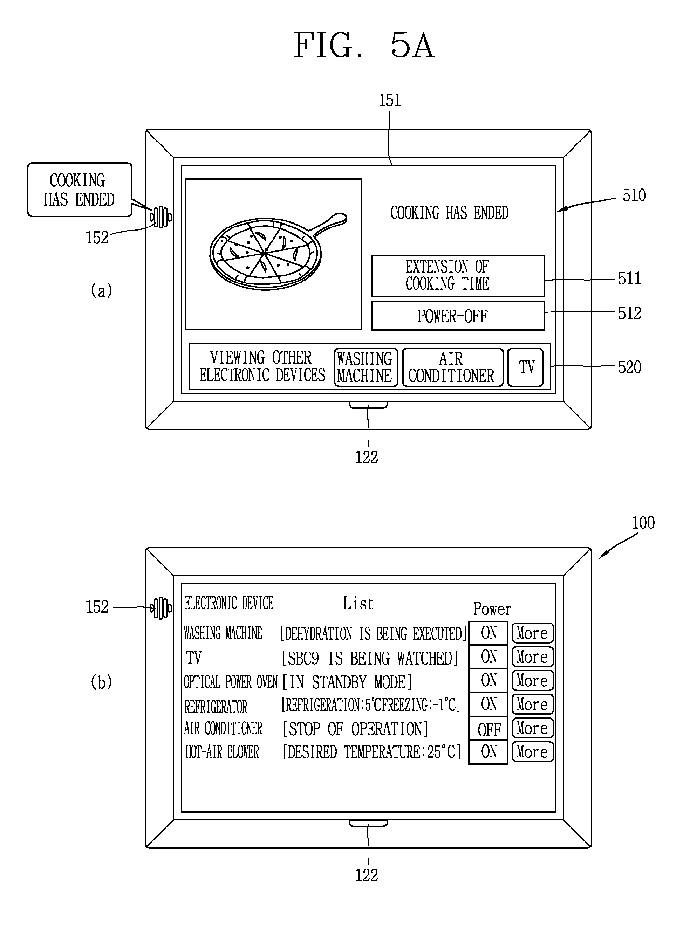

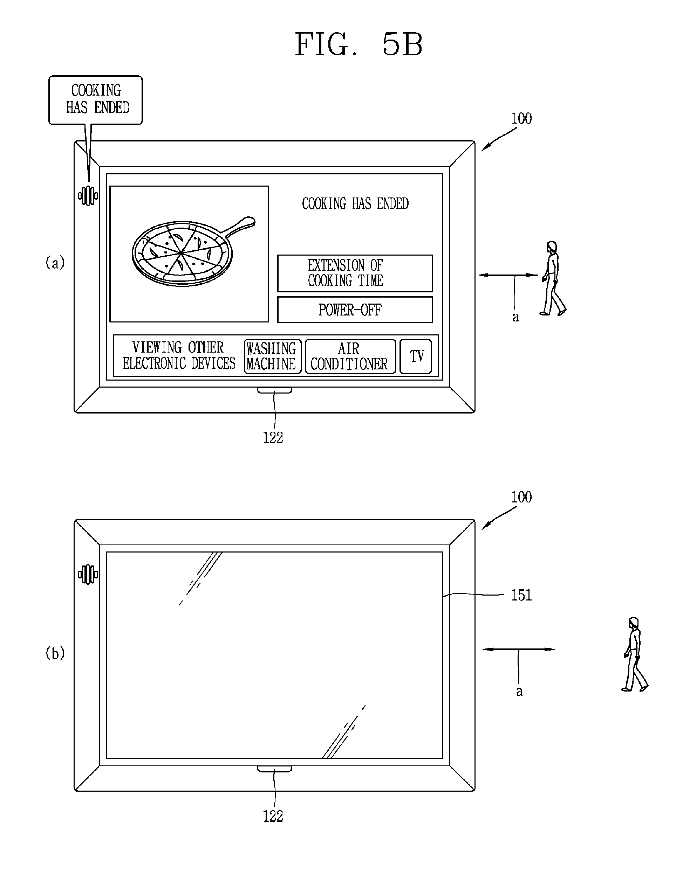

So far, the method of outputting event information generated from an electronic device through a guide voice has been explained. Hereinafter, a method for outputting visual information as well as audible information such as a user's voice will be explained in more detail with reference to the attached drawings. FIGS. 5A and 5B are conceptual views for explaining a method for displaying information by the central controller according to an embodiment of the present invention.

The central controller 100 according to an embodiment of the present invention may include a display unit 151 configured to output information. The display unit 151 may be one of a liquid crystal display (LCD), a thin film transistor-liquid crystal display (TFT-LCD), an organic light-emitting diode (OLED), a flexible display, a 3D display, an e-ink display and e-paper. In a case where the display unit 151 is implemented as e-paper, electrical power for displaying information on the display unit 151 can be reduced.

Information processed by the central controller 100 may be output to the display unit 151. For instance, in a case where event information is received from an electronic device, the electronic device corresponding to the received event, and UI (User Interface) or GUI (Graphic User Interface) related to the received event information may be displayed on the display unit 151.

An example of information output to the display unit 151 will be explained. In a case where event information (e.g., "Completion of cooking") is received from an electronic device (e.g., microwave oven), the controller 180 may output, to the display unit 151, received event information (or status information of the electronic device, which corresponds to event information) such as "Cooking has ended". In this case, the controller 180 may control the audio output unit 152 such that event information is output through the audio output unit 152, together with a guide voice.

If event information is output to the display unit 151, the controller 180 may receive a user's control command through the display unit 151. Accordingly, graphic icons 511 and 512 corresponding to control commands (e.g., Extension of cooking time, Power-off, etc.) transmittable to the electronic device may be output to the display unit 151. Not only such event information, but also a functional icon 520 for controlling other electronic device which can perform communication with the central controller may be output to the display unit 151.

Another example of information output to the display unit 151 will be explained. As shown in FIG. 5A(b), a control icon for controlling at least one electronic device which can perform communication with the central controller 100, and status information of such electronic device may be output to the display unit 151.

Accordingly, even in a case where no event has occurred from an electronic device, a user can check a current status of the electronic device on the display unit 151. Information on the current status of the electronic device may be received from the electronic device at preset time intervals or real time.

In a case where a user cannot view the display unit 151, the controller 180 of the central controller 100 according to an embodiment of the present invention may prevent waste of unnecessary electrical power resulting from information output to the display unit 151. That is, the controller 180 may output information to the display unit 151, in a case where a user near the display unit 151 has been sensed by the sensing unit 140.

As shown in FIG. 5B(a), in a case where an event has occurred from an electronic device and event information on the event has been transmitted to the central controller 100, if a user is sensed by the sensing unit 140 within a prescribed distance 'a', the controller 180 may output the event information to the display unit 151. Here, 'a' indicates a distance within which a user can be recognized by the sensing unit 140. In this case, not only the event information but also a guide voice corresponding to the event information may be output to the display unit 151.

As shown in FIG. 5B(b), in a case where an event has occurred from an electronic device and event information on the event has been transmitted to the central controller 100, if a user is not sensed by the sensing unit 140 within the prescribed distance 'a', the central controller 100 may display only a guide voice on the display unit 151 without displaying the event information.

Although not shown, in a case where a user is positioned close to the display unit 151, the controller 180 may output status information of an electronic device and control icons, by automatically activating the display unit 151. Further, the controller 180 may output status information of the electronic device through a guide voice.

As aforementioned, in the central controller and the method for controlling the same according to an embodiment of the present invention, the display unit is activated only when a user can check the display unit. This can reduce consumption of unnecessary electrical power.

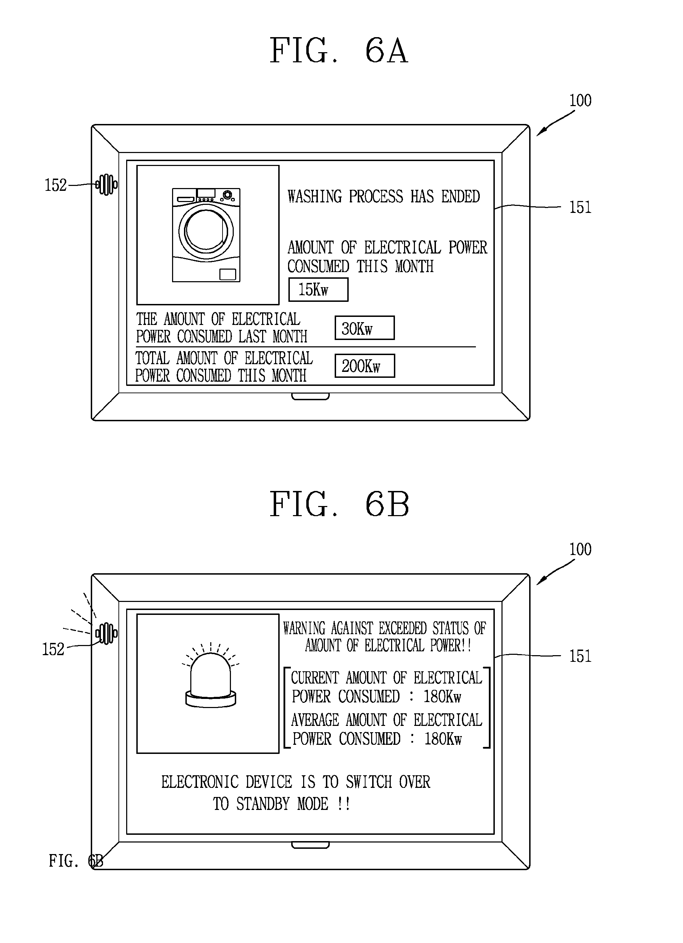

Hereinafter, a method for outputting information on the amount of electrical power consumed by an electronic device will be explained in more detail with reference to the attached drawings. FIGS. 6A and 6B are conceptual views for explaining a method for providing information on the amount of electrical power consumed, by the central controller according to an embodiment of the present invention.

The central controller 100 according to an embodiment of the present invention may provide information on the amount of electrical power consumed by an electronic device, as well as information on an event generated from the electronic device and status information of the electronic device. Further, the controller 180 may provide information on the amount of electrical power consumed by a plurality of electronic devices in an individual manner. In this case, the controller 180 may provide information on the total amount of electrical power consumed by the plurality of electronic devices. Further, the controller 180 may receive information on the average amount of electrical power consumed from an external server, and compare the amount of electrical power consumed by electronic devices with the average amount of electrical power consumed. Then, the controller 180 may provide a comparison result to a user. The controller 180 may inform a user of the amount of electrical power consumed, by converting the amount of electrical power consumed into an electricity bill. The controller 180 may also inform a user of the amount of electrical power to be consumed so that the user cannot pay a progressive tax, based on information on a progressive tax on electricity.

Such information on the amount of electrical power consumed can be output in an audible manner through the audio output unit 152, and can be output in a visible manner through the display unit 151.

As aforementioned with reference to FIG. 5B, such information on the amount of electrical power consumed may be always informed to a user when the display unit 151 is activated.

An example to provide information on the amount of electrical power consumed using the display unit 151 will be explained. As shown in FIG. 6A, in a case where an event has occurred from an electric device and event information has been received by the central controller 100, information on the amount of electrical power consumed may be provided to a user while the event information is output. That is, the controller 180 may provide a user with the amount of electrical power consumed by an electronic device (e.g. washing machine) from which an event has occurred, in correspondence to a preset condition. For instance, the controller 180 may provide a user with information on the amount of electrical power consumed by a washing machine this month, information on the total amount of electrical power consumed by a washing machine last month, and information on the total amount of electrical power consumed this month. Such information on the amount of electrical power consumed can be output in the form of a converted electricity bill, according to a user's selection. Such information on the amount of electrical power consumed may be received from an electronic device real time or at preset time intervals.

The amount of electrical power consumed may be large enough to charge a progressive rate of electricity, or may exceed the average amount of electrical power consumed, or may approach to (or reach or exceed) the desired amount of electrical power consumed preset by a user. In this case, even if an event has not occurred from an electronic device, the controller 180 may provide a user with such information. For instance, as shown in FIG. 6B, the controller 180 may output information on the amount of electrical power consumed (e.g., alarm message) using at least one of the display unit 151 and the audio output unit 152.

When the amount of electrical power consumed is great, the controller 180 may transmit a control signal to an electronic device in a user's set manner or in an automatic manner, the control signal for converting an operation mode of the electronic device into a power saving mode or a standby mode. Then, the electronic device having received such control signal may reduce the amount of electrical power consumed or turn-off power, by controlling a brightness of the display unit, by controlling an indoor temperature, etc.

As aforementioned, in the central controller and the method for controlling the same according to an embodiment of the present invention, information on the amount of electrical power consumed is provided to a user. This can allow the user to easily check the amount of electrical power consumed by an electronic device, and an electricity bill.

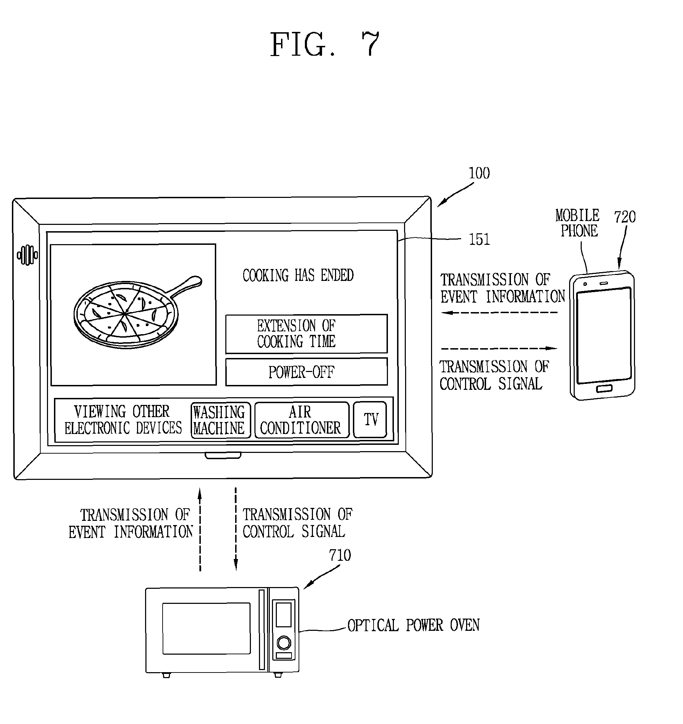

Hereinafter, a method for transmitting event information on an event generated from an electronic device to a mobile terminal will be explained in more detail with reference to the attached drawings. FIG. 7 is a conceptual view for explaining a method for communicating between a central controller according to an embodiment of the present invention and an electronic device.

As shown in FIG. 7, in a case where event information has been received from an electronic device, the central controller 100 according to an embodiment of the present invention may transmit the received event information to a user's mobile terminal 720 (e.g., portable phone, smart phone, tablet PC, etc.) using the wireless communication unit 110. Upon receipt of a control signal for controlling the electronic device from the mobile terminal 720, the central controller 100 may transmit the received control signal to the electronic device using the wireless communication unit 110. Under such configuration, even if a user cannot directly check the central controller 100, the user can check a status of the electronic device and control the electronic device using the mobile terminal 720.

In this case, the controller 180 can output received event information using at least one of the display unit 151 and the audio output unit 152.

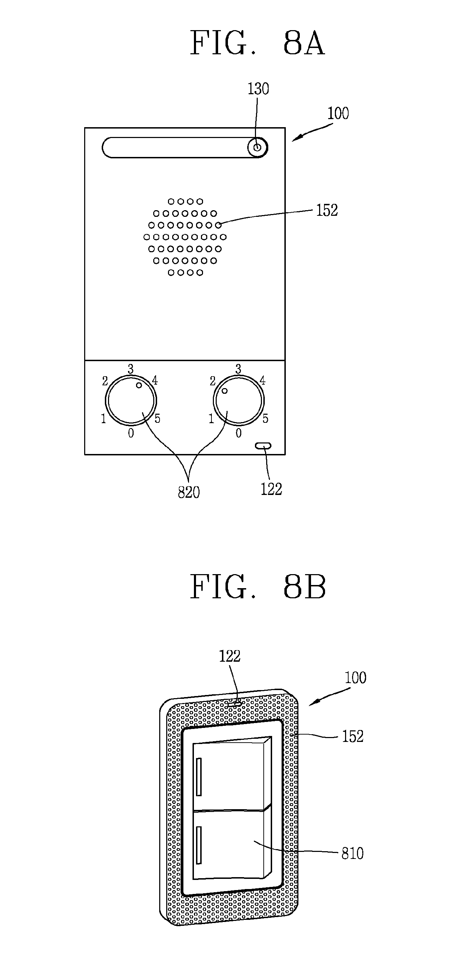

Hereinafter, the appearance of the central controller 100 according to an embodiment of the present invention will be explained in more detail with reference to the attached drawings. FIGS. 8a and 8b are conceptual views for explaining the appearance of the central controller 100 according to an embodiment of the present invention.

As aforementioned with reference to FIG. 4, the central controller 100 according to an embodiment of the present invention may include the audio output unit 152 for outputting event information. That is, the central controller 100 can output information only through the audio output unit 152, without using the display unit 151. In this case, the central controller 100 can have a minimized installation space.

For instance, the central controller 100 may be formed to enclose an edge of a switch 810, so as to be installed together with the switch 810 at home or at an office, etc. That is, the central controller 100 may be formed in a closed loop shape having an opening at a central part thereof. The central controller 100 can enclose the switch 810 using the opening. The closed loop can serve as the audio output unit 152 (e.g., speaker). The microphone 122 may be provided at one region of the closed loop. In this case, a user needs not have an inconvenience to search for an additional installation space of the central controller 100.

As another example, the central controller 100 may serve as the existing switch by being installed at a position from which the existing switch has been removed. As shown, the central controller 100 may include the audio output unit 152 for outputting event information, the microphone 122 for receiving a user's voice, and the user input unit 130 for controlling a level of a sound output from the audio output unit 152. Further, in a case where the existing switch is a light switch, the central controller 100 may further include a function unit (e.g., dial) 820 for controlling the light switch so as to perform functions of the existing switch.

As aforementioned, the central controller is installed together with the existing switch. Accordingly, an additional installation space of the central controller is not required, and power of the existing switch can be used.

It has been explained that the central controller 100 of the present invention is separately provided from an electronic device. However, the present invention is not limited to this. For instance, the central controller 100 may be provided at an electronic device. More specifically, the central controller 100 may be integrally formed with at least one of a smart TV, a washing machine, an air conditioner, a mobile phone, an oven and a hot-air blower.

In this case, the central controller for an electronic device may perform the aforementioned step (S320) for outputting a guide voice indicating a status of the electronic device, based on event information received from the electronic device. Alternatively, an electronic device (e.g., mobile phone) having the central controller may be configured to output event information generated from another electronic device (e.g., air conditioner).

In this case, the electronic device having the central controller may be provided with the microphone 122, in order to input a control command to the event-occurred electronic device. After output of the event information, the electronic device having the central controller may activate a wakeup mode for waiting for voice input to the microphone 122. If a voice has not been input to the microphone 122 for a preset time after activation of the wakeup mode of the microphone 122, the wakeup mode of the microphone 122 may be deactivated.

If a voice has been input to the microphone 122, the controller 180 may analyze the input voice, and may generate a control command corresponding to the analyzed voice.

More specifically, in a case where an electronic device serving as the aforementioned central controller is a television, if an event of recording start or recording completion or an event of program ending occurs, the television may output the occurred event. The television activates a wakeup mode in order to receive a control command relating to the occurred event. In the wakeup mode, the television may receive a control command through voice input, analyze the input voice, and perform the control command. For instance, the control command may be display of a recording list, performance of an extended recording, performance of play, channel conversion, display of an EPG, display of a preferred channel, etc.

As another example, when the current time has reached a preset alarm time, the status of the television is notified to outside. Upon a user's input to turn off the television, the television may perform an OFF function.

In a case where an electronic device serving as the aforementioned central controller is a mobile phone, if an event occurs from the mobile terminal, the mobile phone may output information indicating the occurrence of the event. The mobile terminal activates a wakeup mode in order to receive a control command related to the occurred event. For instance, in a case where the occurred event is related to reception of a call signal, upon receipt of a call signal, the mobile terminal may inform the reception of the call signal to outside. Then, the mobile terminal may receive voice input, analyze the input voice, and then perform a control command corresponding to the analyzed voice. For instance, the control command may be a call, a call through a speaker phone, message transmission, etc.

As another example, when the mobile terminal receives a message from another mobile terminal, the mobile terminal converts the received message into a voice using a text to speech (TTS) technique, and then outputs the voice. Once a user inputs a control command related to the received message, the mobile terminal may perform the control command. For instance, the control command may be message input and message transmission. That is, the controller 180 of the mobile terminal converts an input voice into a text using a speech to text (STT) technique, and then transmits the text to said another mobile terminal.

The central controller and the method for controlling the same can have the following advantages.

Firstly, event information can be received from an electronic device connected to the central controller through wireless communication, and the received event information can be output through a guide voice. Accordingly, in a case where an event has occurred from the electronic device, a user can immediately check information on the event.

Secondly, the central controller can control an electronic device in response to a control command corresponding to a user's voice. This can reduce a user's inconvenience to directly apply a control command onto the electronic device by moving his or her body.

Thirdly, information on the amount of electrical power consumed by an electronic device can be provided. As a result, a user can check information on the amount of electrical power consumed and react to the information.

The aforementioned method may be implemented as a program code stored in a computer-readable storage medium. The storage medium may include ROM, RAM, CD-ROM, a magnetic tape, a floppy disc, an optical data storage device, etc. And, the storage medium may be implemented as carrier wave (transmission through the Internet).

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A central controller, comprising:
a microphone (122);
an audio output unit (152) configured to output audible information;
a wireless communication unit (110) configured to communicate with an electronic device using wireless signals;
an event receive unit (182) configured to receive event information on an event generated from the electronic device, through the wireless communication unit (110); and
a controller (180) configured to control the audio output unit based on the received event information, such that a guide voice indicating a status of the electronic device is output,
wherein once a voice for controlling the electronic device is input to the microphone, the wireless communication unit (110) is controlled such that a control command corresponding to the voice is transmitted to the electronic device.

2. The central controller of claim 1, wherein the controller (180 )activates a wakeup mode for waiting for voice input to the microphone such that the control command is transmitted to the electronic device, in response to reception of the event information, and
wherein in the wakeup mode, the microphone (122) is activated so as to receive voice input.

3. The central controller of claim 2, wherein in a case where no voice is input to the microphone (122) for a preset time after the wakeup mode has been activated, the wakeup mode is deactivated.

4. The central controller of any one of claims 1 and 2, further comprising a display unit (151) configured to output information,
wherein the controller (180) is configured to output status information of the electronic device to the display unit (151), based on the received event information.

5. The central controller of claim 4, wherein the amount of electrical power consumed by the electronic device is displayed on the display unit (151), together with status information of the electronic device, and
wherein the said amount of electrical power consumed by the electronic device is received from the electronic device, real time or at preset time intervals.

6. The central controller of claim 5, wherein when the amount of electrical power consumed by the electronic device exceeds a reference value, the controller (180) outputs an alarm message using at least one of the audio output module (152) and the display unit (151).

7. The central controller of any one of claims 4 and 5, wherein the controller (180) controls the wireless communication unit (110) such that a control signal for switching an operation mode of the electronic device into a power saving mode is transmitted to the electronic device.

8. The central controller of any one of claims 4, 5 and 7, further comprising a sensing unit (140) configured to sense a user's approaching status,
wherein the controller (180) activates the display unit (151) in response to the user's approaching status sensed by the sensing unit (140), and controls the display unit (151) such that the status information is displayed on the display unit (151).

9. The central controller of any one of claims 1, 2 and 4, wherein the controller (180) transmits the received event information to a preset central controller, in response to reception of the event information, and
wherein upon receipt of a control signal for controlling the electronic device from the central controller, the controller (180) controls the wireless communication unit (110) such that the received control signal is transmitted to the electronic device.

10. The central controller of any one of claims 1, 2, 4 and 9, wherein the event generated from the electronic device occurs when a task being executed at the electronic device has ended or stopped, or there is any task executable at the electronic device.

11. A method for controlling a central controller, the method comprising:
communicating the central controller with an electronic device;
receiving event information on an event generated from the electronic device;
outputting a guide voice indicating a status of the electronic device, based on the received event information;
receiving a voice for controlling the electronic device; and
transmitting a control command corresponding to the received voice to the electronic device.

12. The method of claim 11, wherein in the step of outputting a guide voice, when a user is sensed within a preset distance based on the display unit, status information of the electronic device corresponding to the event information is output to the display unit.

13. The method of any one of claims 11 and 12, wherein in the step of receiving event information, information on the amount of electrical power consumed by the electronic device is received, and
wherein when the amount of electrical power consumed by the electronic device exceeds a reference value based on the received information on the amount of electrical power, an alarm message is output in at least one of audible and visual manners.

14. The method of claim 13, further comprising generating a control signal for converting an operation mode of the electronic device into a power saving mode, and transmitting the generated control signal to the electronic device, in a case where the amount of electrical power consumed by the electronic device exceeds a reference value.
